# EUROPEAN PATENT SPECIFICATION

(11) **EP 0 523 121 B1**
(45) Date of publication and mention of the grant of the patent: **19.10.1994**
(21) Application number: 91907053.2
(22) Date of filing: 28.03.1991
(51) Int. Cl.: B21D 53/26, F16H 55/44

(54) **MAKING PULLEYS**
HERSTELLUNG VON RIEMENSCHEIBEN
FABRICATION DE POULIES

(30) Priority: 31.03.1990 GB 9007331
(43) Date of publication of application: 20.01.1993
(73) Proprietor: Bloxwich Engineering Limited, Bloxwich Walsall West Midlands, WS3 2JR (GB)
(72) Inventor: BAKER, Ronald Thomas, Fillongley, Coventry CV7 8DZ (GB)
(74) Representative: Spall, Christopher John
(86) International application number: GB9100495
(87) International publication number: WO9115315

(56) References cited:
- EP-A- 0 156 567
- Patent Abstracts of Japan, vol. 8, no. 50 (M-281)(1487), 7 March 1984, & JP-A-58 202933 (AISHIN) 26 November 1983
- Patent Abstracts of Japan, vol. 8, no. 104 (M-296)(1541), 16 May 1984 & JP-A-59 17065 (AISHIN) 28 January 1984

## Description

This invention relates to the manufacture of poly-V belt pulleys. Since the replacement of a significant proportion of the old Vee-belts with so-called poly-V belts there has been a substantial amount of effort, as evinced by several existing published patent specifications, devoted to the manufacture of pulleys for such belts in a manner such as to make them as light and as strong as possible.

Examples are (in approximate chronological order) U.S. Patent specifications 2,892,431 of Killian and 3, 366,376 of Previte, British 1 537 564 of Aspro Inc., French Utility Certificate 2,488,536 of Ducellier, British 2,087,270A of Drive Manufacturing Inc., European 0 083 684 of Goshi Kaisha, European 0 156 567 of Honda Giken, British 2,153,267A of Construcciones Radio Electro-Mechanicas S.A. and British 2, 135, 421A of Dyneer Corporation.

In every one of the processes disclosed in these patent specifications a flat disc-shaped sheet metal blank of uniform thickness is formed by stamping or drawing into a cup-shaped or bell-shaped so-called can, and then the cylindrical portion of the can is in some way squeezed, deformed or thickened to reduce its axial length and to raise a series of ribs and grooves in its external surface to form the pulley. The initial formation of the can is performed in a press and then the subsequent deforming steps on the cylindrical portion are undertaken in various ways. Generally the can is mounted on a mandrel and then engaged by rollers or roll-forming dies which deform the cylindrical portion by axially compressing it to collapse it and other rollers or dies to impress the Vee grooves in its external surface. The side flanges of the pulley are formed at the same time or in a preliminary step.

In some versions the cylindrical portion is engaged both from the outside and from the inside by ribbed rollers so as to impart an overall corrugated profile to the pulley. This makes for a light weight but it is a less easy process to put into practice than those in which the can is mounted on a solid cylindrical mandrel.

The drawback, however, of using a solid mandrel, and accordingly only engaging the outside face of the can with profiled rollers, is that it is difficult to make this part of the pulley strong enough unless one starts with a blank of a thickness which is greater than is otherwise necessary for forming the radial part of the pulley, and thus one ends up with a pulley which is heavier than it need be. A process has been proposed in which the wall thickness of the grooved portion is initially stepped, so that it has three different internal diameters, the radial wall thickness being progressively less as one moves towards the free edge of the can (Dyneer GB-PS 2 135 421A). In another (Honda EP-PS 0 156, 567) there is a series of closely spaced internal axially extending grooves. In a third process (Goshi Kaisha EP-PS 0 083 684) the outside surface is forced inwards by a groove-forming roller and the inside surface is supported by a mandrel having circumferential ribs, so that grooves are formed on the inside in alignment with the crests on the outside. The drawback of this is that the internal mandrel has to be smaller in diameter than the can, otherwise it could not be withdrawn after forming. The alternative of a collapsible mandrel is complicated and expensive. It is very desirable that the mandrel should be the full size of the inside of the can, so as to support it fully and ensure that there is no out-of-round distortion created during the forming process.

Equally, those processes in which the inside of the can is smooth and cylindrical (e.g. GB-PS 2 087 270A of Drive Manufacturing Inc.) have the practical drawback that the can is difficult to hold against rotation on the mandrel during the groove-forming step, and in practice it may be necessary to clamp the can by means of the mounting holes formed in its hub.

It is also known from JP-A-58202933 to produce a poly-V-pulley by stamping out a can, pressing the can on a mandrel to form a boss and internal axial rib on the can, prior to forming the external Vee groove by rolling. However, no axial compression is undertaken and the can thus produced is unnecessarily heavy.

The aim of the present invention is to provide a further development in the manufacture of poly-V pulley, avoiding the above-mentioned drawbacks of some of the known processes. According to the invention we achieve this by providing a method of manufacturing a sheet metal poly-V-pulley having Vee grooves in its external surface comprising the steps of forming a bell-shaped blank or can, mounting the can on a mandrel, engaging the can by rollers which deform the cylindrical portion by axially compressing it to collapse it and engaging the can by other rollers to impress the Vee grooves in its external surface, characterised in that a limited number of axially extending ribs are formed on the inside cylindrical surface of the can prior to axially compressing the can on the mandrel, the ribs on the inside surface of the can corresponding to grooves provided on the external surface of the mandrel. For example there may be four such ribs.

The co-operation of the ribs and grooves forms a key which ensures that the can cannot inadvertently rotate. Alternatively, if the process is one in which the can is itself to be rotated, the ribs and grooves form driving dogs which have the effect of ensuring that there is no slip.

The number of ribs is preferably small enough to make no significant difference to the weight of the final pulley. Even a single rib would be sufficient, within the scope of the invention, to provide the necessary key, although four are preferred.

As in the known proposals, a thickness of sheet metal can be selected for the blank only sufficient to give the hub and the radial portion of the pulley the required strength and rigidity. The axially extending portion, on which the grooves are subsequently formed, can be thickened, after formation of the can by drawing or stamping, and the thickening can be achieved by a known process, preferably by that forming the subject of European Patent Application No. 0 343 314 A2 of WF Maschinenbau und Blechformtechnik GmbH & Co. KG. In that process the peripheral portion of a disc-shaped sheet metal blank is rolled over into a semi-circular profile and then that profile is squeezed radially inwards while restrained against axial expansion.

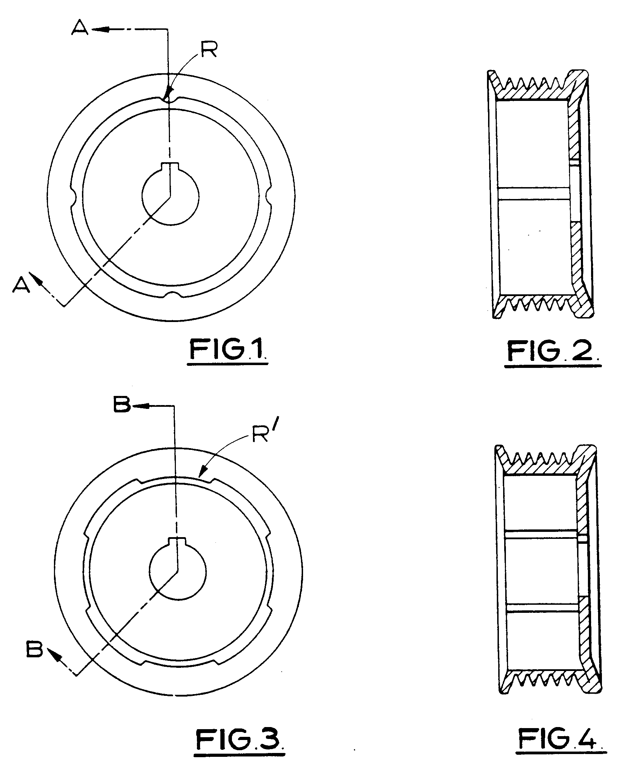

Two examples of pulleys made by the process according to the invention are illustrated in the accompanying drawings. Figures 1 and 2 are respectively an axial view and a section on the line A-A in Fig 1 showing a first embodiment and Figure 3 and 4 are corresponding views of a second embodiment, the section of Figure 4 being on the line B-B in Figure 3.

In the first version there are four ribs R, spaced 90° apart around the inside surface of the pulley. They are formed in the drawing of the initial blank or 'can' and serve to key the can to corresponding grooves in the mandrel (not shown) on which it is supported during the subsequent rolling operation in which the external V grooves are formed. In a typical example the starting material is 2 mm to 3 mm thick and in the finished pulley the radial distance between the base of each groove and the inside surface of the pulley is between 1.3 and 1.5 mm. The ribs themselves are of domed profile between 1.7 and 1.5 mm in radial depth and rather greater than this in circumferential extent.

In the version shown in Figure 3 and 4 there are again four equally spaced ribs but in this case the ribs R' are of substantially greater circumferential extent, representing about 35% to 40% of the total internal surface of the pulley. With a starting material having a thickness of 2.2 mm, the thickness of metal between the bases of the belt grooves and the internal surface of the pulley is 1.1 mm on the regions between the ribs and 1.5 or 2.2 mm in the region of the ribs, that is to say, the ribs have a radial depth of 0.4 to 1.1 mm.

## Claims

1. A method of manufacturing a sheet metal poly-V-pulley having Vee grooves in its external surface comprising the steps of forming a bell-shaped blank or can, mounting the can on a mandrel, engaging the can by rollers which deform the cylindrical portion by axially compressing it to collapse it and engaging the can by other rollers to impress the Vee grooves in its external surface, characterised in that a limited number of axially extending ribs are formed on the inside cylindrical surface of the can prior to axially compressing the can on the mandrel, the ribs on the inside surface of the can corresponding to grooves provided on the external surface of the mandrel.

2. A method according to claim 1, characterized in that the axially extending ribs are formed during the drawing of the blank or can.

## Patentansprüche

1. Ein Verfahren zum Herstellen einer aus Metallblech bestehenden Vielfach-V-Riemenscheibe mit V-förmigen Nuten in ihrer äußeren Oberfläche, umfassend die Schritte des Ausbildens eines bzw. einer kelch- oder glockenförmigen Werkstücks bzw. Büchse, des Befestigens der Büchse auf einem Dom, des Ineingriffbringens von Walzen mit der Büchse, welche Walzen den zylindrischen Abschnitt dadurch deformieren, daß sie ihn in Axialrichtung pressen, damit er zusammengedrückt wird, und des Ineingriffbringens von anderen Walzen mit der Büchse, um die V-förmigen Nuten in ihrer äußeren Oberfläche einzudrücken,
**dadurch gekennzeichnet,**
daß eine begrenzte Anzahl von sich in Axialrichtung erstreckenden Rippen auf der inneren zylindrischen Oberfläche der Büchse vor dem axialen Pressen der Büchse auf dem Dorn ausgebildet wird, wobei die Rippen auf der inneren Oberfläche der Büchse Nuten entsprechen, die auf der äußeren Oberfläche des Dorns vorgesehen sind.

2. Ein Verfahren gemäß Anspruch 1,
**dadurch gekennzeichnet,**
daß die sich in Axialrichtung erstreckenden Rippen während des Ziehens des Werkstücks oder der Büchse ausgebildet werden.

## Revendications

1. Procédé de fabrication d'une poulie métallique à gorge poly-trapézoïdale ayant des rainures en V dans sa surface externe comprenant les étapes de formation d'une ébauche ou d'un bidon en forme de cloche, montant le bidon sur un mandrin, engrenant le bidon par des rouleaux presseurs qui déforment la partie cylindrique en la comprimant de façon axiale pour l'écraser et en engrenant le bidon par d'autres rouleaux presseurs pour imprimer les rainures en V dans sa surface externe, caractérisé en ce qu'un nombre limité de nervures s'allongeant de façon axiale sont formées sur la surface cylindrique interne du bidon avant de comprimer le bidon de façon axiale sur le mandrin, les nervures sur la surface interne du bidon correspondant aux rainures pourvues sur la surface externe du mandrin.

2. Procédé selon la revendication 1, caractérisé en ce que les nervures s'allongeant de façon axiale sont formées durant l'emboutissage de la pièce découpée ou du bidon.
